# EUROPÄISCHE PATENTSCHRIFT

(11) **EP 2 389 697 B1**
(45) Veröffentlichungstag und Bekanntmachung des Hinweises auf die Patenterteilung: **04.06.2014**
(21) Anmeldenummer: 10701326.0
(22) Anmeldetag: 26.01.2010
(51) Int. Cl.: H01M 2/06, H01M 2/30, H01M 10/04, H01M 10/0525, H01M 10/0585, H01M 2/02

(54) **ELEKTROCHEMISCHE ENERGIESPEICHERZELLE**
ELECTROCHEMICAL ENERGY STORAGE CELL
CELLULE DE STOCKAGE D'ÉNERGIE ÉLECTROCHIMIQUE

(30) Priorität: 26.01.2009 DE 102009006117
(43) Veröffentlichungstag der Anmeldung: 30.11.2011
(73) Patentinhaber: Li-Tec Battery GmbH, 01917 Kamenz (DE)
(72) Erfinder: HOHENTHANNER, Claus-Rupert, 63457 Hanau (DE); SCHÄFER, Tim, 99768 Harztor (DE); KAISER, Jörg, 01917 Kamenz (DE)
(74) Vertreter: Wallinger, Michael
(86) Internationale Anmeldenummer: PCT/EP2010/000448
(87) Internationale Veröffentlichungsnummer: WO 2010/084026

(56) Entgegenhaltungen:
- EP-A1- 1 475 852
- EP-A1- 2 001 073
- EP-A2- 1 505 669
- EP-A2- 1 530 247
- EP-A2- 1 998 400
- WO-A1-2005/117163

## Beschreibung

Die vorliegende Erfindung betrifft eine elektrochemische Energiespeicherzelle nach dem Oberbegriff des Anspruchs 1.

Es sind Batterien (Primärspeicher) und Akkumulatoren (Sekundärspeicher) zur Speicherung elektrischer Energie bekannt, die aus einer oder mehreren Speicherzellen aufgebaut sind, in denen bei Anlegen eines Ladestroms elektrische Energie in einer elektrochemischen Ladereaktion zwischen einer Kathode und einer Anode in bzw. zwischen einem Elektrolyten in chemische Energie umgewandelt und somit gespeichert wird und in denen bei Anlegen eines elektrischen Verbrauchers chemische Energie in einer elektrochemischen Entladereaktion in elektrische Energie umwandelt wird. Dabei werden Primärspeicher in der Regel nur ein Mal aufgeladen und sind nach Entladung zu entsorgen, während Sekundärspeicher mehrere (von einigen 100 bis über 10000) Zyklen von Aufladung und Entladung erlauben. Es ist dabei anzumerken, dass auch Akkumulatoren bisweilen als Batterien bezeichnet werden, wie etwa Fahrzeugbatterien, die bekanntlich häufige Ladezyklen erleben.

In den letzten Jahren gewinnen Primär- und Sekundärspeicher auf der Basis von Lithiumverbindungen an Bedeutung. Diese weisen eine hohe Energiedichte und thermische Stabilität auf, liefern eine konstante Spannung bei geringer Selbstentladung und sind frei von dem sogenannten Memory-Effekt.

Es ist bekannt, Energiespeicher und insbesondere Lithium-Batterien und -Akkumulatoren in der Form dünner Platten herzustellen. Das Skript "Primäre und wiederaufladebare Lithium-Batterien" zum Praktikum Anorganisch-Chemische Technologie der TU Graz von Dr. K.-C. Möller und Dr. M. Winter aus dem Februar 2005 zeigt z.B. Lithium-lonen-Polymerzellen im Format einer Scheckkarte oder gar einer SmartCard. Zum Funktionsprinzip einer Lithium-Ionen-Zelle wird beispielhaft auf dieses Skript verwiesen. Bei solchen Zellen werden Kathoden- und Anodenmaterial, Elektroden und Separatoren in Form dünner Folien auf geeignete Weise aufeinandergelegt (gestapelt) und in eine Hüllfolie aus einem Verbundmaterial verpackt, wobei Stromableiter an einer Kante der Zelle seitlich hervorragen. Insbesondere wird zunächst eine Stromsammelfolie aus Streckmetall (Kupfer) zwischen zwei Anodenfolien aus Graphit gelegt und laminiert, und werden in gleicher Weise zwei Strornsammeifolien aus Streckmetall (Aluminium) jeweils zwischen zwei Kathodenfolien aus LiCoO2 gelegt und laminiert. Dabei weisen-die Kathodenfolien jeweils die halbe Kapazität einer Anodenfolie auf. Dann wird das Folientriplett der Anode zwischen zwei Separatorfolien einlaminiert, und anschließend werden auf dieses Paket die zwei Folientripletts der Halbkathoden auflaminiert. Eine solche Zelle wird danach extrahiert und getrocknet, mit Elektrolyt aus 1 M LiClO4 in 1:1 Ethylencarbo- nat:Dimethylcarbonat getränkt und in Aluminium-Verbundfolie eingeschweißt, und zwar so, dass jeweilige verlängerte Abschnitte der Stromsammelfolien auf einer Seite durch die Schweißnaht hindurchtreten und als Anschlüsse bzw. Stromableiter nach außen hervorstehen.

Ein ähnlicher Aufbau ist auch in der EP 1 475 852 A1 beschrieben. Hier sind zwei Folientripletts auf der Anodenseite und drei Folientripletts auf der Kathodenseite vorgesehen, jeweils im Wechsel angeordnet und durch Separatorfolien voneinander getrennt. Durch Änderung der Anzahl der Anoden- und Kathodenpaare kann die Kapazität einer solchen Zelle nach Bedarf eingestellt werden. Ferner unterscheidet sich der Aufbau der nach außen geführten Stromabnehmer von dem in dem vorstehend genannten Skript gezeigten. Und zwar werden hier nicht jeweilige Verlängerungen der Stromsammelfolien zusammengefasst und gemeinsam durch eine Schweißnaht der Verbundfolie hindurch nach außen geführt; vielmehr werden die Enden der Stromsammelfolien innerhalb der Hüllfolie zusammengefasst und durch Verbindungsmittel wie etwa Nieten, die senkrecht durch die Hüllfolie hindurch verlaufen, mit einem außen auf der Hüllfolie aufliegenden, stabförmigen Stromableiter verbunden. Als Widerlager ist innerhalb der Hüllfolie zwischen dieser und den aufeinander liegenden Enden der jeweiligen Elektrode ein Metallstück vorgesehen, das mit vernietet ist. Ferner ist innen und außen zwischen der Hüllfolie und dem Stromableiter bzw. dem Metallstück ein Isoliermaterial angeordnet und mit vernietet. Die außen liegenden Stromableiter ragen dann wiederum an einer Kante der Flachzelle ab.

In der EP 1 562 242 A2 ist auch ein von den Enden der Stromsammelfolien getrennter, stabförmiger Stromableiter vorgesehen, der aber bereits innerhalb der Hüllfolie mit den Enden der Stromsammelfolien verbunden und wieder durch die Schweißnaht der Hüllfolie hindurch nach außen geführt wird. Die stabförmigen Stromableiter ragen dabei wahlweise an einer Kante oder aber an einander gegenüberliegenden Kanten von der Flachzelle ab. Die Druckschrift widmet sich aber weniger der Ausbildung der Stromableiter als der Vermeidung von Faltenbildung der Separatorfolien.

Eine Kontaktierung einer Flachzelle an gegenüberliegenden Kanten der Zelle, wie es in der EP 1 562 242 A2 - ohne Angabe eines ersichtlichen technischen Grundes oder einer technischen Realisierung - angedeutet, ist eher unüblich. In EDV-Anwendungen werden Kleinbatterien im Kartenformat üblicherweise in Feder- oder Messerleisten gesteckt, in denen Kontakte in einer Reihe vorliegen. Werden dagegen mehrere Flachzellen zu einem Zellpaket gestapelt, wie es etwa bei Automobilbatterien aufgrund angestrebter höherer Spannungen und Kapazitäten vorkommt, so erfolgt die Verschaltung der Einzelzellen ebenfalls üblicherweise auf einer Seite, wie es beispielhaft in der WO 2008/128764 A1, der WO 2008/128769 A1, WO 2008/128770 A1, der WO 2008/128771 A1 oder der JP 07-282841 A gezeigt ist.

Die Kontaktierung einer Flachzelle an gegenüberliegenden Kanten kann vorteilhaft sein, wenn damit auch eine Haltefunktion verbunden ist. Sind die Stromableiter dann aber stabförmig wie bei der EP 1 562 242 A2, ist die Lagestabilität um die durch die stabförmigen Stromableiter definierte Achse nicht gegeben und ist die Stabilität der Stromableiter, d.h., die mögliche Haltekraft gering. Auch wenn von den in den anderen oben genannten Druckschriften gezeigten, eher streifenförmigen Stomableitern einer von diesen auf der gegenüberliegenden Kante abragen würde, ergäbe sich nicht die gewünschte Lagestabilität.

Die europäische Offenlegungsschrift EP 1 530 247 A2 offenbart eine Batterie mit einer Anzahl an Zellen in einer Stapelrichtung und einer Anzahl an leitenden Elementen, welche jeweils eine elektrische Leitfähigkeit aufweisen, und einer Anzahl an Isolationsschichten, welche jeweils isolierende Eigenschaften aufweisen. Die Anzahl an leitenden Elemente und die Anzahl an Isolationsschichten sind abwechselnd in Stapelrichtung mit der Anzahl an Zellen mit Ausgangsanschlüssen so angeordnet, dass die Zellen elektrisch in der Stapelrichtung verbunden sind.

Die europäische Offenlegungsschrift EP 1 998 400 A2 offenbart eine Sekundärbatterie mit einer verbesserten Haltbarkeit. Die Sekundärbatterie weist eine Elektrodenstruktur auf, wobei die Kathode auf einer Seite einer Basisschicht mit elektrisch isolierenden Eigenschaften und die Anode auf der anderen Seite der Basisschicht gebildet werden. Eine Anzahl der Elektrodenstrukturen wird mit einer dazwischen angeordneten Elektrolytschicht so gestapelt, dass die Kathode und die Anode angrenzender Elektrodenstrukturen sich auf gegenüberliegenden Seiten einer Elektrolytschicht befinden.

Die internationale Offenlegungsschrift WO 2005/117163 A1 offenbart eine Batterie mit einer Anzahl flacher Batteriezellen, welche so gestapelt sind, dass deren Anschlüsse alternierend angeordnet sind. Die Batterie weist eine Struktur auf, bei welcher die flachen Batteriezellen in Reihe geschaltet sind, indem deren Anschlüsse verbunden werden.

Die europäische Offenlegungsschrift EP 1 475 852 A1 offenbart eine Struktur eines Anschlusses für eine Sekundärbatterie mit flachen Batteriezellen und einer flexiblen Umhüllung. Innerhalb der Umhüllung sind innere Anschlüsse mit den Anoden bzw. mit den Kathoden verbunden. Über Befestigungsmittel sind die inneren Anschlüsse durch die Umhüllung mit äußeren außerhalb der Umhüllung angeordneten Anschlüssen verbunden.

Es ist daher eine Aufgabe der vorliegenden Erfindung, eine flache elektrochemische Zelle zu schaffen, die unter gleichzeitiger Funktion der Stromabnahme lagestabil an gegenüberliegenden Kanten der Zelle gehalten werden kann.

Die Aufgabe wird durch die Merkmale des Anspruchs 1 gelöst. Vorteilhafte Weiterbildungen der Erfindung bilden den Gegenstand der Unteransprüche.

Eine Elektroenergie-Speicherzelle gemäß der Erfindung ist ausgestattet mit einem aktiven Teil, der eingerichtet und angepasst ist, von außen zugeführte elektrische Energie zu speichern und gespeicherte elektrische Energie nach außen abzugeben; einer Umhüllung aus einem Folienmaterial, welche den aktiven Teil gas- und flüssigkeitsdicht umhüllt; und wenigstens zwei Stromabnehmern, die mit dem aktiven Teil verbunden sind und zur Zuführung elektrischen Stroms von außen an den aktiven Teil und zur Abgabe von dem aktiven Teil abgegebenen elektrischen Stroms nach außen eingerichtet und angepasst sind, wobei der von der Umhüllung umhüllte Teil ein prismatisches Gebilde von im Wesentlichen quaderförmiger Gestalt beschreibt, dessen Ausdehnung in einer ersten Raumrichtung wesentlich kleiner als die Ausdehnung in den beiden verbleibenden Raumrichtungen ist, sodass im Wesentlichen zwei einander gegenüberliegende, im Wesentliche parallele flächige Seiten sowie vier die beiden flächigen Seiten verbindende Schmalseiten definiert sind, und wobei der erste und der zweite Stromableiter parallel zu den Ebenen der beiden flächigen Seiten in entgegengesetzten Richtungen von zwei einander gegenüberliegenden Schmalseiten aus von der Umhüllung abragen. Dabei ist die Ausdehnung des ersten und des zweiten Stromableiters entlang der Schmalseiten, von denen aus sie abragen, größer ist als die Hälfte der Länge dieser Schmalseiten. Insbesondere beträgt die Ausdehnung des ersten und des zweiten Stromableiters entlang der Schmalseiten, von denen aus sie abragen, wenigstens zwei Drittel, vorzugsweise wenigstens drei Viertel der Länge dieser Schmalseiten.

Mit gegenüberliegenden Stromableitern, die eine hinreichende Länge gemäß der Erfindung aufweisen, ermöglicht eine Kontaktierung einer Flachzelle an gegenüberliegenden Kanten auch eine befriedigende Haltefunktion. Die mögliche Haltekraft ist ausreichend, um die Zelle stabil an ihrer Position und in ihrer Lage zu halten.

Eine außermittige Anordnung des ersten und der zweiten Stromableiters in Bezug auf die jeweiligen Schmalseiten kann beispielsweise vorteilhaft sein, wenn die Zelle hängend angeordnet ist. Dann sorgt bereits die Schwerkraft für eine grundlegende Lagedefinition, während über die Erstreckung der Stromableiter Winkelabweichungen aufgefangen werden können. Dagegen ist eine mittige Anordnung vorzuziehen, wenn die Zelle primär liegend angeordnet ist.

Die stabilste Halterung und damit die geringsten in die Zelle eingeleitenden Kräfte und Momente ergeben sich, wenn sich der erste und der zweite Stromableiter im Wesentlichen über die gesamte Länge der Schmalseiten, von denen aus sie abragen, erstrecken.

Die Umhüllung besteht vorzugsweise aus einer laminierten Folie, welche das Laminat aus Elektroden und Trennschichten gas- und flüssigkeitsdicht umhüllt. Insbesondere kann die Umhüllung aus einer ersten Isolierschicht, einer Leiterschicht und einer zweiten Isolierschicht bestehen, wobei die Isolierschichten vorzugsweise aus einem Kunststoff bestehen und die Leiterschicht vorzugsweise aus Aluminium oder einer Aluminiumlegierung oder einem anderen Metall oder einer anderen Metall-Legierung besteht. Auf diese Weise können verschiedene Funktionen und Eigenschaften der Umhüllung wie etwa Schweißbarkeit, mechanische Festigkeit elektrische und magnetische Abschirmung, Dichtigkeit gegen Flüssigkeiten, Dämpfe und Gase, insbesondere Wasser, Wasserdampf und Luft, von außen und Beständigkeit gegen Säuren und Elektrolyte von innen erfüllt werden.

Die Umhüllung ist insbesondere so ausgebildet, dass wenigstens eine Schweißnaht, vorzugsweise zwei sich entlang gegenüberliegender Schmalseiten erstreckende Schweißnähte, besonders bevorzugt auch eine sich über eine der beiden flächigen Seiten hinweg oder entlang einer dritten Schmalseite erstreckende Schweißnaht aufweist, oder dass sie zwei Teilfolien aufweist, die entlang der Schmalseiten miteinander verschweißt sind.

Eine Ausführungsform, die nicht zur Erfindung gehört, ist so ausgebildet, dass wenigstens einer der Stromableiter einen inneren Teil, der sich innerhalb der Umhüllung befindet, und einen äußeren Teil, der sich außerhalb der Umhüllung befindet, aufweist, wobei der innere Teil des Stromableiters mit dem aktiven Teil der Speicherzelle verbunden ist. Insbesondere kann der wenigstens eine Stromableiter durch eine Schweißnaht der Umhüllung hindurch geführt sein.
Dieser Aufbau verwirklicht eine besonders glatte und flache Kontur der Zelle.

Die Stromableiter liegen auf der Außenseite der Umhüllung auf und sind durch die Umhüllung hindurch mit dem aktiven Teil kon taktiert. Dieser Aufbau weist eine große Robustheit auf.

Die Zelle kann so ausgebildet sein, dass wenigstens einer der Stromableiter im abragenden Bereich wenigstens eine Bohrung aufweist. Es kann auch wenigstens einer der Stromableiter im abragenden Bereich eine Mehrzahl von Bohrungen aufweisen, wobei vorzugsweise wenigstens eine der Bohrungen einen anderen Durchmesser als andere der Bohrungen aufweist. Ferner kann einer der Stromableiter im abragenden Bereich wenigstens eine Bohrung an einer Stelle in Breitenrichtung aufweisen, an welcher der andere Stromableiter keine Bohrung im abragenden Bereich aufweist. Mit diesen Anordnungen ist einerseits eine Zentrierung und zusätzliche Fixierung gegen Schlupf parallel zu den Oberflächen der Stromableiter möglich, andererseits eine Kodierung der Polarität, um einen polverkehrten Einbau auszuschließen.

Die Erfindung eignet sich für alle Arten von Elektroenergie-Speicherzellen, bei welcher die Speicherung und Abgabe der elektrischen Energie durch jeweilige elektrochemische Reaktionen erfolgen. Eine besonders flache Ausführung des aktiven Teils, der im Wesentlichen die Dicke der Zelle bestimmt, wird durch einen laminierten Aufbau mit Folien chemisch aktiver Materialien, elektrisch leitender Materialien und Trennmaterialien in geeigneter Schichtung erzielt. So kann der aktive Teil eine Mehrzahl von Elektroden zweier Arten aufweisen, wobei jeweils eine Elektrode einer ersten Art durch eine Trennschicht von der Elektrode einer zweiten Art getrennt ist, wobei die Elektroden der ersten Art und die Elektroden der zweiten Art jeweils miteinander und mit einem der Stromableiter verbunden sind.

Insbesondere eignet sich die Erfindung für galvanische Zellen, insbesondere Sekundärzellen, auf Lithium-Ionen-Basis.

Vorteilhafterweise ist die Zelle evakuiert, sodass der aktive Teil frei von Luft und Feuchtigkeit gehalten werden kann.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

In den Zeichnungen ist:
- Fig. 1: eine perspektivische Ansicht einer Speicherzelle einer ersten bevorzugten Ausführungsform der vorliegenden Erfindung;
- Fig. 2: eine Schnittansicht der in Fig. 1 gezeigten Speicherzelle entlang einer Ebene II in Fig. 1;
- Fig. 3: eine vergrößerte Ansicht einer Einzelheit der in Fign. 1 und 2 gezeigten Speicherzelle entlang einer Linie III in Fig. 2;
- Fig. 4: eine Draufsicht einer Speicherzelle einer Ausgestaltung zum besseren Verständnis der Erfindung;
- Fig. 5: eine Seitenansicht der in Fig. 4 gezeigten Speicherzelle, die teilweise entlang einer Ebene V in Fig. 4 geschnitten ist;
- Fig. 6: eine Ansicht eines unfertigen Montagezustands der in Fign. 4 und 5 gezeigten Speicherzelle.

Es wird darauf hingewiesen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend oder zwingend zu verstehen sind. Insbesondere ist die Abmessung im Verhältnis zu den anderen Raumrichtungen in einigen Zeichnungen erheblich überhöht dargesteltt.

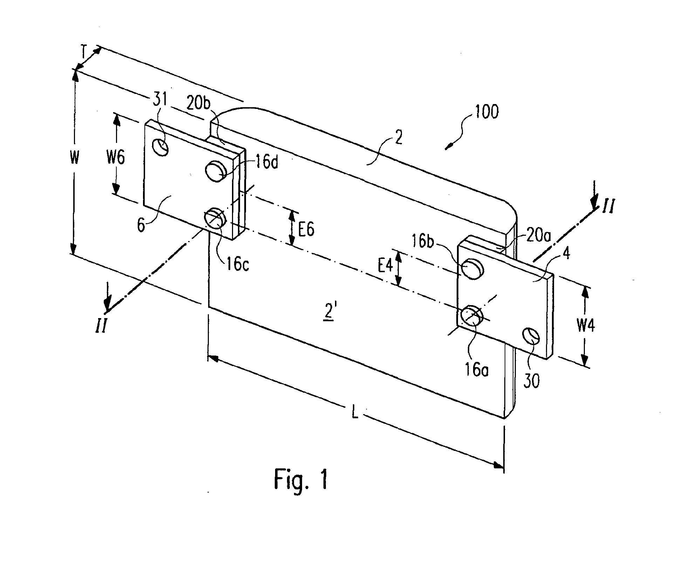

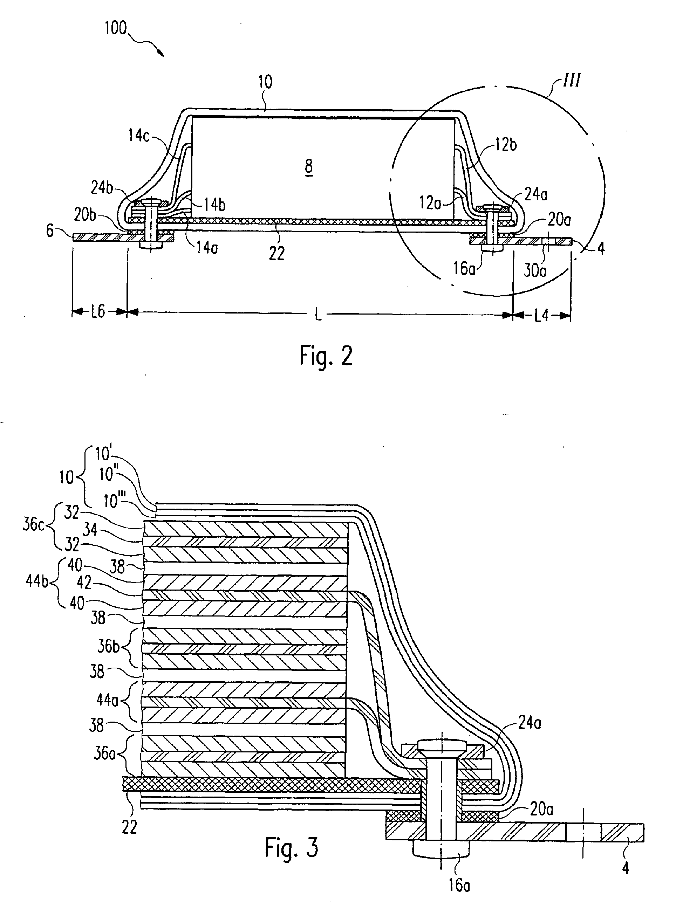

In Fign. 1 bis 3 ist eine Lithium-Ionen-Akkumulatorzelle 100 als eine erste bevorzugte Ausführungsform einer Elektroenergie-Speicherzelle gemäß der Erfindung dargestellt. Dabei ist Fig. 1 eine perspektivische Gesamtansicht der Akkumulatorzelle 100, ist Fig. 2 eine Längsschnittansicht derselben entlang einer durch strichdoppelpunktierte Linien in Fig. 1 aufgespannten Ebene II in Pfeilrichtung gesehen, und ist Fig. 3 eine vergrößerte Ansicht einer durch eine strichdoppelpunktierte Linie angegebenen Einzelheit III in Fig. 2.

Wie in Fig. 1 dargestellt, weist die Zelle 100 im Wesentlichen einen prismatischen Grundkörper 2 und zwei plattenförmige Stromableiter 4, 6 auf.

Der Grundkörper 2 beherbergt eine in der Fig. 1 nicht sichtbaren aktiven Teil der Speicherzelle 100 und weist eine Länge L, eine Breite W und eine Dicke T auf. Es ist festzuhalten, dass die Dicke T deutlich geringer als die Breite W und die Länge L ist. Die Breite W ist im-dargestellten konkreten Ausführungsbeispiel geringer als die Länge L dargestellt. Dies ist jedoch nicht zwingend; vielmehr können Länge L und Breite W im Wesentlichen gleich sein oder kann die Länge L kleiner als die Breite W sein.

Der Stromableiter 4 liegt parallel auf einer Flachseite 2' des Grundkörpers 2 auf und ist mittels Befestigungsmitteln 16a, 16b in einem Randbereich an dem Grundkörper 2 befestigt, sodass er in Richtung der Länge L um ein Überstandmaß L4 (vgl. Fig. 2) von dem Grundkörper 2 abragt. Zwischen dem Stromableiter 4 und dem Grundkörper 2 ist eine Isolierplatte 20a angeordnet. In Breitenrichtung des Grundkörpers 2 weist der Stromableiter 4 eine Breite W4 auf, die geringer als die Breite W, aber größer als die Hälfte der Breite W ist. Ferner ist der Stromableiter 4 in Breitenrichtung des Grundkörpers 2 um ein Maß E4 außermittig angeordnet.

Der Stromableiter 6 liegt auf der gleichen Flachseite des Grundkörpers 2 wie der Stromableiter 4 auf und ist mittels Befestigungsmitteln 16c, 16d in einem dem Randbereich, in welchem der Stromableiter 4 aufliegt, gegenüberliegenden Randbereich an dem Grundkörper 2 befestigt, sodass er in Längenrichtung dem Stromableiter 4 entgegengesetzt um ein Überstandmaß L6 (vgl. Fig. 2) von dem Grundkörper 2 abragt. Zwischen dem Stromableiter 6 und dem Grundkörper 2 ist eine Isolierplatte 20b angeordnet. In Breitenrichtung des Grundkörpers 2 weist der Stromableiter 6 eine Breite W6 auf, die geringer als die Breite W, aber größer als die Hälfte der Breite W ist. Ferner ist der Stromableiter 6 in Breitenrichtung des Grundkörpers 2 um ein Maß E6 außermittig angeordnet. Im dargestellten Ausführungsbeispiel sind die Breite B6, das Überstandmaß L6 und die Außermittigkeit E6 des Stromableiters 6 der Breite B4, dem Überstandmaß L4 und der Außermittigkeit E4 des Stromableiters 4 gleich. Es versteht sich, dass in Abwandlungen je nach Anwendungsfall und Einbausituation unterschiedliche Maße verwendet werden können.

Der Stromableiter 4 weist in seinem frei abragenden Teil eine Durchgangsbohrung 30 auf, während der Stromableiter 6 in seinem frei abragenden Teil eine Durchgangsbohrung 31 aufweist. In diese Durchgangsbohrungen 30, 31 können entsprechende Zapfen greifen, die ein Verrutschen der Zelle in Richtung der Länge L und der Breite B sowie ein Verdrehen um eine Achse in Richtung der Dicke T verhindern und die Kontaktierung verbessern. Dabei weist die Durchgangsbohrung 30 in dem Stromableiter 4 eine andere Lage in Breitenrichtung als die Durchgangsbohrung 31 in dem Stromableiter 6 auf. Die Durchgangsbohrung 31 weist einen von der Durchgangsbohrung 30 verschiedenen Durchmesser auf. Aufgrund der unsymmetrischen Lage und der unterschiedlichen Durchmesser der Durchgangsbohrungen 30, 31 ist eine Kodierung der Einbaurichtung zur Sicherheit gegen Verpolung möglich. In Abwandlungen können mehrere Durchgangsbohrungen auf jedem Stromableiter vorgesehen sein. In weiteren Abwandlungen kann die Kodierung der Einbaurichtung auch durch unterschiedliche Durchmesser der Bohrungen erfolgen. In weiteren Abwandlungen können auch Nuten, Kerben, Abschrägungen, Abrundungen in den Stromableitern 4, 6 oder unterschiedliche Breite, Überstand oder Außermittigkeit der Stromableiter 4, 6 herangezogen werden.

Der Aufbau der Akkumulatorzelle 100 wird aus der Längsschnittansicht in Fig. 2 deutlicher. Der Längsschnitt in Fig. 2 ist entlang einer Ebene genommen, die sich in Richtung der Dicke T und der Länge L erstreckt und durch die Befestigungsmittel 16a, 16c hindurch verläuft.

Wie in Fig. 2 dargestellt, wird der Grundkörper 2 der Zelle 100 im Wesentlichen von einem aktiven Block 8 gebildet, der zusammen mit weiteren Einbauteilen von einer Hüllfolie 10 umhüllt ist.

Auf gegenüberliegenden Seiten in Längsrichtung ragen Leiterfahnen 12a, 12b der Anodenseite und Leiterfahnen 14a, 14b, 14c der Kathodenseite aus dem aktiven Block 8 heraus. Die Leiterfahnen 12a, 12b der Anodenseite sind auf der einen Seite zusammengefasst und zwischen einer Isolatorplatte 22, auf welcher der auch der aktive Block 8 angeordnet ist, und einer inneren Stromsammelschiene 24a angeordnet. Die Leiterfahnen 14a, 14b, 14c der Kathodenseite sind auf der anderen Seite zusammengefasst und zwischen der Isolatorplatte 22 und einer inneren Stromsammelschiene 24b angeordnet. Der aktive Block 8 mit Leiterfahnen 12a, 12b, 14a, 14b, 14c, die Stromsammelschiene 24a der Anodenseite und die Stromsammelschiene 24b der Kathodenseite sowie die Isolatorplatte 22 sind gemeinsam von der Hüllfolie 10 umhüllt. Die Hüllfolie ist an geeigneter Stelle verschweißt und evakuiert.

Durch die Hüllfolie 10 hindurch ist die Stromsammelschiene 24a der Anodenseite mittels der Befestigungsmittel 16a, 16b mit dem Stromableiter 4 fest verbunden. Ebenso ist die Stromsammelschiene 24b der Kathodenseite mittels der Befestigungsmittel 16c, 16d durch die Hüllfolie 10 hindurch mit dem Stromableiter 6 fest verbunden. Die Befestigungsmittel 16a, 16b, 16c, 16d sind im dargestellten Ausführungsbeispiel Nieten, die aus einem leitenden Material bestehen und eine feste, verliersichere Verpressung und Durchkontaktierung gewährleisten.

Die Isolierplatten 20a, 20b und ggf. die Isolatorplatte 22 sorgen auch für eine Abdichtung der Durchtrittsstelle der Befestigungsmittel 16a, 16b, 16c, 16d. Zur Vermeidung eines Kurzschlusses zwischen den Befestigungsmitteln 16a, 16b der Anodenseite und den Befestigungsmitteln 16b, 16c der Kathodenseite über die Hüllfolie 10 sind Isolierhülsen 26a bis 26d vorgesehen, die Im Bereich der Isolierplatten 20a, 20b, der Hüllfolie 10 und der Isolatorplatte 22 auf den Schäften der Befestigungsmittel 16a, 16b, 16c, 16d angeordnet sind. In Abwandlungen dieses Ausführungsbeispiels kann auf die Isolierhülsen 26a bis 26d verzichtet werden, wenn die Schäfte der Befestigungsmittel 16a, 16b, 16c, 16d eine isolierende Oberflächenschicht aufweisen. Die Isolierhülsen 26a bis 26d können verliersicher mit den Schäften der Befestigungsmittel 16a, 16b, 16c, 16d verbunden sein, indem sie etwa aufgeschrumpft sind, gegebenenfalls in einem Bereich verringerten Schaftdurchmessers. In weiteren Abwandlungen kann die Isolatorplatte 22 kragenartige Erhebungen um die Durchtrittsöffnungen für die Befestigungsmittel 16a bis 16d aufweisen, die in entsprechende Vertiefungen auf der Seite der Isolierplatten 20a, 20b greifen und die Hüllfolie 10 von den Schäften der Befestigungsmittel 16a bis 16d wegdrängen. Die Anordnung von Erhebungen und Vertiefungen kann auch umgekehrt sein.

Der aktive Block 8 besteht im Wesentlichen aus einem Laminat von verschiedenartigen Folien, und auch die Hüllfolie 10 besteht aus mehreren Schichten, wie in der vergrößerten Ansicht des Anodenendes in Fig. 3 genauer dargestellt.

Und zwar ist der aktive Block 8 aus drei Kathodenschichten 36a, 36b, 36c und zwei Anodenschichten 44a, 44b gebildet, die im Wechsel mit jeweils einer Separatorfolie dazwischen übereinander angeordnet sind. Jede Anodenschicht 44a, 44b weist zwei anodenaktive Folien 40, 40 auf mit einer dazwischen angeordneten Stromsammelfolie 42, die in eine der Leiterfahnen 12a, 12b der Anodenseite übergeht. Jede Kathodenschicht 36a, 36b, 36c weist zwei kathodenaktive Folien 32, 32 auf mit einer dazwischen angeordneten Stromsammelfolie 34, die in eine der Leiterfahnen 14a, 14b, 14c der Kathodenseite übergeht. Die kathodenaktiven Folien 32 bestehen im vorliegenden Ausführungsbeispiel aus einem Lithium-Metalloxid oder einer Lithium-Metallverbindung, die anodenaktiven Folien 40 aus Graphit und die Separatorfolien aus einem mikroporösen Elektrolyten. Die Stromsammelfolien 34 der Kathodenseite bestehen im vorliegenden Ausführungsbeispiel aus Aluminium, die Stromsammelfolien 42 der Anodenseite aus Kupfer. Ferner ist die erste und letzte Schicht eines aktiven Blocks jeweils eine Kathodenschicht, wobei diese erste und letzte Schicht jeweils die halbe Kapazität der dazwischen liegenden Anoden- und Kathodenschichten aufweisen. Es versteht sich, dass in Abwandlungen eine abweichende Anzahl von Kathoden- und Anodenschichten gewählt werden kann, je nach gewünschter Kapazität der Zelle.

Die Hüllfolie 10 weist drei Schichten auf, die sowohl eine hinreichende mechanische Festigkeit als auch Beständigkeit gegen Elektrolytmaterial und eine gute elektrische und thermische Isolierung gewährleistet. So weist etwa in an sich bekannter Weise die Hüllfolie eine innere Schicht 10' aus einem Thermoplast wie Polyethylen oder Polypropylen, eine mittlere Schicht 10" aus einem Metall wie etwa Aluminium und eine äußere Schicht 10"' aus einem Kunststoff wie Polyamid auf. Der Aufbau der Hüllfolie 10 ist jedoch nicht Bestandteil der vorliegenden Erfindung.

Bei einem beispielhaften Herstellungsverfahren zur Herstellung des aktiven Blocks 8 werden zunächst Schichten aus zwei kathodenaktiven oder anodenaktiven Folien gleicher Länge mit einer längeren Elektroden- oder Stromsammelfolie laminiert, in einem flüssigen Elektrolyten getränkt und getrocknet. Sodann werden die laminierten, getränkten und getrockneten Kathoden- und Anodenschichten im Wechsel mit jeweils einer Separatorfolie dazwischen so angeordnet, dass jeweils die Stromsammelfolien der Kathodenschichten auf einer Seite und die Stromsammelfolien der Anodenschichten auf der anderen Seite hervorstehen, und zusammenlaminiert. In einem abgewandelten Herstellungsverfahren kann auch zuerst die mittlere Kathodenschicht in zwei Separatorfolien einlaminiert werden, dann die beiden Anodenschichten beidseitig auf dieses Kernlaminat auflaminiert werden und wiederum in zwei Separatorfolien einlaminiert werden und schließlich die äußeren zwei Kathodenschichten auflaminiert werden. Andere Abfolgen sind ebenfalls denkbar.

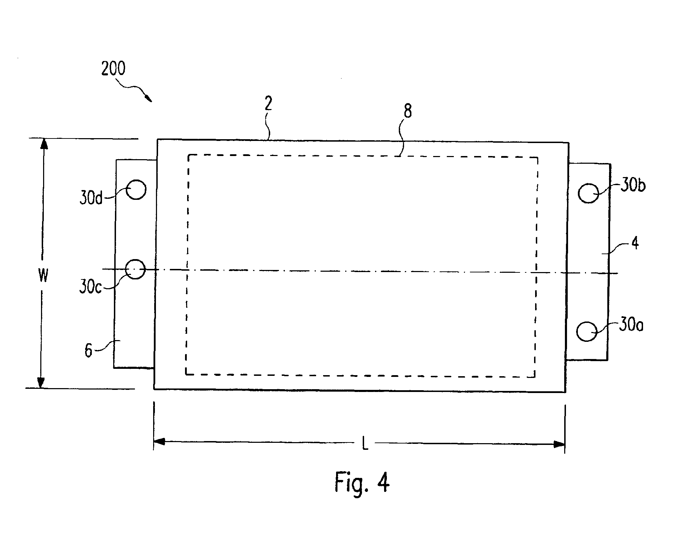

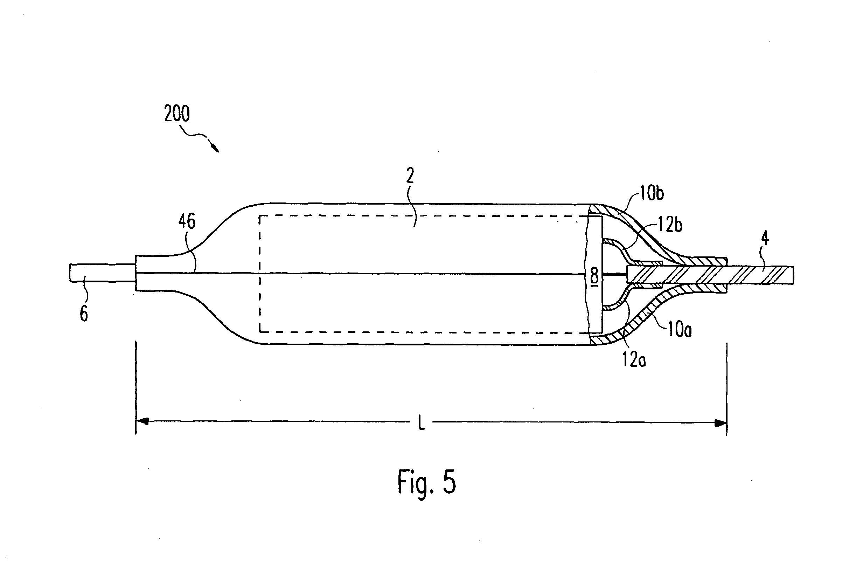

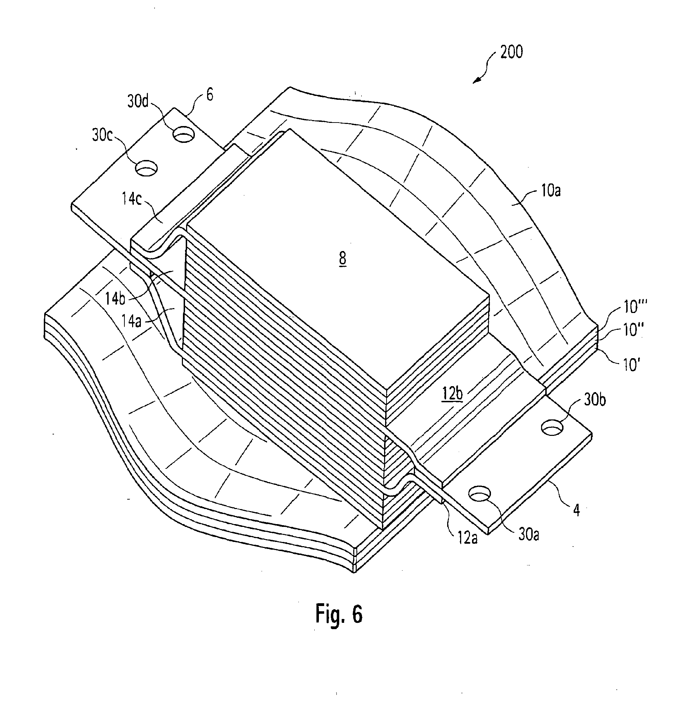

In Fign. 4 bis 6 ist eine Lithium-Ionen-Akkumulatorzelle 200 zum besseren Verständnis der Erfindung dargestellt. Dabei ist Fig. 4 eine Draufsicht der Akkumulatorzelle 200, ist Fig. 5 eine Seitenansicht derselben im Teilschnitt in einer Ebene V in Fig. 4, und zeigt Fig. 6 einen unfertigen Zustand der Zelle 200 in einer perspektivischen Ansicht. Soweit in dieser Ausgestaltung gleiche Bauteile wie in der ersten Ausführungsform verwendet werden, sind diese auch hier mit gleichen oder entsprechenden Bezugszeichen versehen. Ferner sind, soweit es nicht anders angegeben oder offensichtlich technisch unmöglich ist, die Ausführungen bezüglich des ersten Ausführungsbeispiels auch auf die vorliegende Ausgestaltung zu übertragen.

Wie in Fig. 4 dargestellt, weist die Akkumulatorzelle 200 dieser Ausgestaltung ebenfalls einen Hauptkörper 2 und zwei in entgegengesetzten Richtungen davon abragende Stromableiter 4, 6 auf. Mit gestrichelten Linien ist in der Figur schematisch der in dem Hauptkörper 2 enthaltene aktive Block 8 angedeutet.

Der Aufbau der Akkumulatorzelle 200 wird aus einer im rechten Teil in der Mittelebene V geschnittenen Seitenansicht deutlicher, die in Fig. 5 gezeigt ist. Die Blickrichtung entspricht dabei einem Pfeil in Fig. 4.

Im Unterschied zu der Akkumulatorzelle 100 der ersten Ausführungsform führt der Stromableiter 4 der Zelle 200 dieser Ausgestaltung durch die Umhüllung des Hauptkörpers 2 hindurch in das Innere desselben hinein. Dies wird dadurch ermöglicht, dass die Umhüllung aus einer unteren Hüllfolie 10a und einer oberen Hüllfolie 10b besteht, die an einer umlaufenden Naht 46, die etwa auf halber Höhe der Dicke T des Hauptkörpers verläuft, verschweißt sind. Durch diese Naht 46 hindurch dringt der Stromableiter 4 gas- und flüssigkeitsdicht in das Innere des Hauptkörpers 2. Zwei Leiterfahnen 12a, 12b der Anodenseite, die aus dem aktiven Block 8 herausragen, sind mit dem Stromableiter 4 verbunden. Der Aufbau des aktiven Blocks 8 der Zelle 200 dieser Ausgestaltung entspricht demjenigen in dem ersten Ausführungsbeispiel entspricht. Jedoch greifen hier die Leiterfahnen 12a, 12b entsprechend der symmetrischen Anordnung des Stromableiters 4 in Richtung der Dicke T je nach ihrer Lage im aktiven Block 8 von oben und unten auf den Stromableiter 4, der somit auch als Stromsammelschiene der Anodenseite dient. In einer Abwandlung dieser Ausgestaltung können die Leiferfahnen 12a, 12b zunächst in einer Stromsammelschiene zusammengefasst sein, die ihrerseits innerhalb der Umhüllung 10 mit dem Stromableiter 4 verbunden ist.

Gleiches gilt analog für den Stromableiter 6 und Leiterfahnen 14a, 14b, 14c der Kathodenseite.

Fig. 6 ist eine perspektivische Ansicht eines unfertigen Zusammenbauzustands der Zelle 200 der Ausgestaltung nach einem beispielhaften Herstellungsverfahren. Es ist dargestellt, wie ein fertig laminierter Folienstapel 8 mit zwei Leiterfahnen 12a, 12b der Anodenseite, die leitend mit dem Stromableiter 4 verbunden sind, und drei Leiterfahnen 14a, 14b, 14c der Kathodenseite, die leitend mit dem Stromableiter 6 verbunden sind, auf die zugeschnittene untere Hüllfolie 10a gelegt ist. Im weiteren Verlauf der Herstillung wird anschließend die obere Hüllfolie 10b aufgelegt, der Innenraum evakuiert und die Ränder der beiden Hüllfolien 10a, 10b verschweißt bzw. auf geeignete Weise gas- und flüssigkeitsdicht mit den Stromableitern 4, 6 verbunden.

Auch wenn bei der Ausgestaltung zwei Hüllfolien 10a, 10b vorgesehen sind, die an einer umlaufenden Naht 46 mit an den Innenseiten aufeinanderliegenden Folienrändern verschweißt sind, ist diese Anordnung nicht zwingend. Vielmehr kann auch der aktive Teil 8 mit den Leiterfahnen 12a, 12b, 14a bis 14c und dem innen liegenden Teil der Stromableiter 4, 6 in eine einzige Hüllfolie eingeschlagen werden, die nur an drei Seiten verschweißt wird. Die Naht entlang der Längsseite der Zelle 200 ist so gestaltet, dass die Innenseiten der Folienränder aufeinanderliegen. Dies ist nicht zwingend, sondern es kann auch eine überlappende Nahtform vorgesehen sein, sodass an der längs verlaufenden Schmalseite der Zelle 200 kein Folienrand wegsteht.

Wie in Fig. 4 gezeigt, sind auch bei der Ausgestaltung Kodier- und Zentriermittel in Form von Durchgangslöchern 30a bis 30d in den Ableitern 4, 6 vorgesehen sein. Genauer gesagt sind in dem Stromableiter 4 Durchgangslöcher 30a, 30b vorgesehen, die symmetrisch in Breitenrichtung angeordnet sind, und sind in dem Stromableiter 6 Durchgangslöcher 30c, 30d vorgesehen, die unsymmetrisch in Breitenrichtung angeordnet sind. Es versteht sich, dass Anordnung und Abwandlungen entsprechend dem ersten Ausführungsbeispiel ebenso denkbar sind.

Bei dieser Ausgestaltung erstrecken sich die Stromableiter 4, 6 symmetrisch über nahezu die gesamte Breite der Zelle 200. Es versteht sich, dass auch diesbezüglich Anordnung und Abwandlungen entsprechend dem ersten Ausführungsbeispiel ebenso denkbar sind. Ebenso ist die hier gezeigte Anordnung auch auf das erste Ausführungsbeispiel anwendbar.

In dem vorstehenden Ausführungsbeispiel wurden Elektroenergie-Speichervorrichtungen vom Typ eines Lithium-Ionen-Sekundärspeichers (Akkumulators) beschrieben. Die Erfindung ist jedoch auf jeden Typ Form von Elektroenergie-Speichervorrichtungen anwendbar. Sie kann auf Primärspeicher (Batterien) angewendet werden. Ebenso ist die Art der elektrochemischen Reaktion zur Speicherung und Abgabe elektrischer Energie nicht auf Lithium-Metalloxidreaktionen beschränkt; vielmehr können die einzelnen Speicherzellen auf jeder geeigneten elektrochemischen Reaktion beruhen.

### Liste der Bezugszeichen:

- 100,200: Akkumulatorzelle
- 2: Hauptkörper
- 2': Flachseite
- 4: Stromableiter (Anodenseite)
- 6: Stromableiter (Kathodenseite)
- 8: aktiver Block
- 10: Hüllfolie
- 10', 10", 10"': Schichten zu 10
- 10a, 10b: obere, untere Hüllfolie
- 12a, 12b: Leiterfahnen (Anodenseite)
- 14a, 14b, 14c: Leiterfahnen (Kathodenseite)
- 16a bis 16d: Niete (Befestigungsmittel)
- 20a, 20b: äußere Isolatorplatten
- 22: innere Isolatorplatte
- 24a, 24b: Stromsammelschienen
- 26a bis 26d: Isolierhülsen
- 30, 30a, 30b, 30b, 30c, 30d, 31: Durchgangslöcher in 4, 6
- 32: Folie aus Kathodenmaterial
- 34: Folie aus Leitermaterial (Kathodenseite)
- 36a, 36b, 36c: Kathodenschichten
- 38: Separatorfolie
- 40: Folie aus Anodenmaterial
- 42: Folie aus Leitermaterial (Anodenseite)
- 44a, 44b: Anodenschichten
- 46: Naht

Es wird ausdrücklich darauf hingewiesen, dass die vorstehende Liste der Bezugszeichen Teil der Beschreibung ist.

## Patentansprüche

1. Elektroenergie-Speicherzelle (100, 200), mit einem aktiven Teil, der eingerichtet und angepasst ist, von außen zugeführte elektrische Energie zu speichern und gespeicherte elektrische Energie nach außen abzugeben; einer Umhüllung (10) aus einem Folienmaterial, welche den aktiven Teil (8) gas- und flüssigkeitsdicht umhüllt; und wenigstens zwei Stromableitern 4, 6), die mit dem aktiven Teil (8) verbunden sind und zur Zuführung elektrischen Stroms von außen an den aktiven Teil (8) und zur Abgabe von dem aktiven Teil (8) abgegebenen elektrischen Stroms nach außen eingerichtet und angepasst sind, wobei der von der Umhüllung (10) umhüllte Teil ein prismatisches Gebilde (2) von im Wesentlichen quaderförmiger Gestalt beschreibt, dessen Ausdehnung in einer ersten Raumrichtung (T) wesentlich kleiner als die Ausdehnung in den beiden verbleibenden Raumrichtungen (W, L) ist, sodass im Wesentlichen zwei einander gegenüberliegende, im Wesentliche parallele flächige Seiten sowie vier die beiden flächigen Seiten verbindende Schmalseiten definiert sind, und wobei der erste und der zweite Stromableiter (4, 6) parallel zu den Ebenen der beiden flächigen Seiten in entgegengesetzten Richtungen von zwei einander gegenüberliegenden Schmalseiten aus von der Umhüllung (10) abragen, **dadurch gekennzeichnet, dass** die Ausdehnung des ersten und des zweiten Stromableiters (4, 6) entlang der Schmalseiten, von denen aus sie abragen, größer ist als die Hälfte der Länge dieser Schmalseiten und dass beide Stromableiter (4, 6) auf der unteren Außenseite der Umhüllung (10) aufliegen und durch die Umhüllung (10) hindurch mit dem aktiven Teil (8) kontaktiert sind, wobei ein elektrischer Kontakt zwischen den Stromableitern (4, 6) und Leiterfahnen (12a, 12b, 14a, 14b, 14c) des aktiven Teils (8) mittels Befestigungsmitteln (16a, 16b, 16c, 16d) hergestellt wird und wobei eine innere durch gängige Isolatorplatte (22) zwischen dem aktiven Teil (8) und der Umhüllung (10) im Bereich der Befestigungsmittel angeordnet ist und wobei die Leiterfahnen (12a, 12b, 14a, 14b, 14c) auf der inneren Isolatorplatte (22) und Stromsammelschienen (24a, 24b) auf den Leiterfahnen (12a, 12b, 14a, 14b, 14c) aufliegen und wobei zwischen der Umhüllung (10) und den Stromableitern (4, 6) jeweils eine äußere Isolatorplatte (20a, 20b) angeordnet ist und wobei die Stromsammel schienen (24a, 24b) mit den Stromableitern (4, 6) mittels der Befestigungsmittel (16a, 16b, 16c, 16d) durch die Hüllfolie (10) hindurch fest verbunden sind.

2. Elektroenergie-Speicherzelle (100, 200) nach Anspruch 1, **dadurch gekennzeichnet, dass** Ausdehnung des ersten und des zweiten Stromableiters (4, 6) entlang der Schmalseiten, von denen aus sie abragen, wenigstens zwei Drittel, vorzugsweise wenigstens drei Viertel der Länge dieser Schmalseiten beträgt.

3. Elektroenergie-Speicherzelle (100, 200) nach Anspruch 1 oder 2, **dadurch gekennzeichnet, dass** wenigstens einer des ersten und der zweiten Stromableiters (4, 6) in Bezug auf die jeweilige Schmalseite außermittig angeordnet ist.

4. Elektroenergie-Speicherzelle (100, 200) nach Anspruch 1 oder 2, **dadurch gekennzeichnet, dass** wenigstens einer der ersten und zweiten Stromableiter (4, 6) in Bezug auf die jeweilige Schmalseite mittig angeordnet ist.

5. Elektroenergie-Speicherzelle (100, 200) nach Anspruch 1 oder 4, **dadurch gekennzeichnet, dass** sich der erste und der zweite Stromableiter (4, 6) im Wesentlichen über die gesamte Länge der Schmalseiten, von denen aus sie abragen, erstrecken.

6. Elektroenergie-Speicherzelle (100, 200) einem der vorstehenden Ansprüche, **dadurch gekennzeichnet, dass** die Umhüllung (10) aus einer vorzugsweise laminierten Folie besteht, welche das Laminat aus Elektroden und Trennschichten gas- und flüssigkeitsdicht umhüllt, und insbesondere dass die Umhüllung (10) aus einer ersten Isolierschicht, einer Leiterschicht und einer zweiten Isolierschicht besteht, wobei die Isolierschichten vorzugsweise aus einem Kunststoff bestehen und die Leiterschicht vorzugsweise aus Aluminium oder einer Aluminiumlegierung oder einem anderen Metall oder einer anderen Metall-Legierung besteht.

7. Elektroenergie-Speicherzelle (100, 200) nach Anspruch 6, **dadurch gekennzeichnet, dass** die Umhüllung (10) zwei Teilfolien aufweist, die entlang der Schmalseiten miteinander verschweißt sind.

8. Elektroenergie-Speicherzelle (100, 200) nach einem der vorstehenden Ansprüche, **dadurch gekennzeichnet, dass** wenigstens einer der Stromableiter (4, 6) im abragenden Bereich wenigstens eine Bohrung (30, 31) aufweist oder dass wenigstens einer der Stromableiter (4, 6) im abragenden Bereich eine Mehrzahl von Bohrungen (30, 31) aufweist, wobei vorzugsweise wenigstens eine der Bohrungen (30, 31) einen anderen Durchmesser als andere der Bohrungen (30, 31) aufweist.

9. Elektroenergie-Speicherzelle (100, 200) nach Anspruch 8, **dadurch gekennzeichnet, dass** einer der Stromableiter (4, 6) im abragenden Bereich wenigstens eine Bohrung (30, 31) an einer Stelle in Breitenrichtung aufweist, an welcher der andere Stromableiter (4, 6) keine Bohrung (30, 31) im abragenden Bereich aufweist.

10. Elektroenergie-Speicherzelle (100, 200) nach einem der vorstehenden Ansprüche, **dadurch gekennzeichnet, dass** es sich um eine galvanische Zelle, insbesondere eine galvanische Sekundärzelle handelt.

11. Elektroenergie-Speicherzelle (100, 200) nach Anspruch 10, **dadurch gekennzeichnet, dass** der aktive Teil (8) eine Mehrzahl von Elektroden zweier Arten aufweist, wobei jeweils eine Elektrode einer ersten Art (36a, 36b, 36c) durch eine Trennschicht von der Elektrode einer zweiten Art (44a, 44b) getrennt ist, wobei die Elektroden der ersten Art (36a, 36b, 36c) und die Elektroden der zweiten Art (44a, 44b) jeweils miteinander und mit einem der Stromableiter (4, 6) verbunden sind.

12. Elektroenergie-Speicherzelle (100, 200) nach Anspruch 11, **dadurch gekennzeichnet, dass** jede Elektrode ein Laminat ist, das wenigstens zwei Schichten eines chemisch aktiven Materials und und wenigstens einer Schicht eines elektrisch leitenden Materials aufweist und mit einem Elektrolytmaterial getränkt ist, wobei die Schicht oder die Schichten des elektrisch leitenden Materials eine größere Länge als die Schichten des jeweiligen chemisch aktiven Materials aufweist und auf einer Seite des Laminats herausragt, wobei die Laminate der Elektroden mit jeweils dazwischen liegenden Trennschichten so angeordnet und vorzugsweise laminiert sind, dass die Schichten elektrisch leitenden Materials der Elektroden der einen Art auf einer Seite herausragen und dort miteinander verbunden sind, die einer Seite, auf welcher die Schichten elektrisch leitenden Materials der Elektroden der anderen Art herausragen und miteinander verbunden sind, in Längsrichtung gegenüberliegt.

13. Elektroenergie-Speicherzelle nach Anspruch 12, **dadurch gekennzeichnet, dass** das chemisch aktive Material wenigstens einer der Elektroden eine Lithiumverbindung aufweist.

## Claims

1. An electrical energy storage cell (100, 200) comprising an active part which is disposed and adapted to store externally supplied electrical energy and to externally release stored electrical energy; a casing (10) composed of a film material which encases the active part (8) in gas-tight and liquid-tight manner; and at least two current conductors (4, 6) which are connected to the active part (8) and are disposed and adapted to supply external electric current to the active part (8) and to externally release electric current discharged by the active part (8), wherein the part encased by the casing (10) delineates a prismatic structure (2) of substantially cube shape, the elongation of which is substantially less in a first spatial direction (T) than the elongation in the two remaining spatial directions (W, L) such that substantially two oppositely disposed, substantially parallel flat sides as well as four narrow sides connecting the two flat side are defined, and wherein the first and the second current conductor (4, 6) protrude in opposite directions from the casing (10) from two oppositely disposed narrow sides parallel to the planes of the two flat sides, **characterized in that** the elongation of the first and the second current conductor (4, 6) along the narrow sides from which they protrude is greater than half the length of said narrow sides and that both current conductors (4, 6) bear on the lower outer side of the casing (10) and are contacted to the active part (8) via the casing (10), wherein an electrical contact is made between the current conductors (4, 6) and conductor tabs (12a, 12b, 14a, 14b, 14c) of the active part (8) by means of fixing elements (16a, 16b, 16c, 16d) and wherein an inner continuous insulator plate (22) is arranged between the active part (8) and the casing (10) in the region of the fixing element, and wherein the conductor tabs (12a, 12b, 14a, 14b, 14c) bear on the inner insulator plate (22) and current busbars (24a, 24b) on the conductor tabs (12a, 12b, 14a, 14b, 14c), and wherein a respective outer insulator plate (20a, 20b) is arranged between the casing (10) and the current conductors (4, 6), and wherein the current busbars (24a, 24b) are fixedly connected to the current conductors (4, 6) through the casing film (10) by means of the fixing elements (16a, 16b, 16c, 16d).

2. The electrical energy storage cell (100, 200) according to claim 1, **characterized in that** the elongation of the first and the second current conductor (4, 6) along the narrow sides from which they protrude is at least two-thirds, preferably at least three-fourths the length of said narrow sides.

3. The electrical energy storage cell (100, 200) according to claim 1 or 2, **characterized in that** at least one of the first and the second current conductors (4, 6) is arranged excentrically relative to the respective narrow side.

4. The electrical energy storage cell (100, 200) according to claim 1 or 2, **characterized in that** at least one of the first and second current conductors (4, 6) is arranged centrically relative to the respective narrow side.

5. The electrical energy storage cell (100, 200) according to claim 1 or 4, **characterized in that** the first and the second current conductor (4, 6) extend substantially over the entire length of the narrow sides from which they protrude.

6. The electrical energy storage cell (100, 200) according to any one of the preceding claims, **characterized in that** the casing (10) is composed of a preferably laminated film which encases the laminate formed from electrodes and separating layers in gas-tight and liquid-tight manner, and in particular that the casing (10) consists of a first insulating layer, a conductor layer and a second insulating layer, wherein the insulating layers preferably consist of a plastic and the conductor layer preferably consists of aluminum or an aluminum alloy or another metal or another metal alloy.

7. The electrical energy storage cell (100, 200) according to claim 6, **characterized in that** the casing (10) comprises two individual films which are welded together along the narrow sides.

8. The electrical energy storage cell (100, 200) according to any one of the preceding claims, **characterized in that** at least one of the current conductors (4, 6) has at least one through hole (30, 31) in the protruding region or that at least one of the current conductors (4, 6) has a plurality of through holes (30, 31) in the protruding region, wherein preferably at least one of said through holes (30, 31) has a different diameter than said other through holes (30, 31).

9. The electrical energy storage cell (100, 200) according to claim 8, **characterized in that** one of the current conductors (4, 6) has at least one through hole (30, 31) in the protruding region at a point in the width direction at which the other current conductor (4, 6) has no through hole (30, 31) in the protruding region.

10. The electrical energy storage cell (100, 200) according to any one of the preceding claims, **characterized in that** same is a galvanic cell, particularly a galvanic secondary cell.

11. The electrical energy storage cell (100, 200) according to claim 10, **characterized in that** the active part (8) comprises a plurality of electrodes of two types, wherein each electrode of a first type (36a, 36b, 36c) is separated from the electrode of a second type (44a, 44b) by a separating layer, wherein the electrodes of the first type (36a, 36b, 36c) and the electrodes of the second type (44a, 44b) are each connected together and to one of the current conductors (4, 6).

12. The electrical energy storage cell (100, 200) according to claim 11, **characterized in that** each electrode is a laminate which comprises at least two layers of a chemically active material and at least one layer of an electrically conductive material and is saturated with an electrolyte material, wherein the layer or layers of electrically conductive material has/have a greater length than the layers of the respective chemically active material and protrude(s) from one side of the laminate, wherein the laminates of the electrodes with interposed separating layers are arranged and preferably laminated such that the layers of electrically conductive material of the electrodes of the one type protrude from and are connected together on one side disposed longitudinally opposite from a side from which the layers of electrically conductive material of the electrodes of the other type protrude and are connected together.

13. The electrical energy storage cell according to claim 12, **characterized in that** the chemically active material of at least one of the electrodes comprises a lithium compound.

## Revendications

1. Cellule de stockage d'énergie électrochimique (100, 200) comportant une partie active qui est conçue et adaptée pour stocker de l'énergie acheminée de l'extérieur, et l'énergie électrique stockée est évacuée vers l'extérieur ; une enveloppe (10) constituée d'un matériau en film qui enveloppe de façon étanche aux gaz et aux liquides, la partie active (8) ; et au moins deux conducteurs en aval (4, 6) qui sont reliés à la partie active (8) et sont conçus et adaptés pour l'acheminement du courant électrique de l'extérieur à la partie active (8) et pour la distribution du courant électrique distribué de la partie active (8) vers l'extérieur, dans laquelle la partie enveloppée par l'enveloppe (10) décrit une forme prismatique (2) de configuration essentiellement parallélépipédique, dont l'étendue est essentiellement inférieure dans une première direction spatiale (T) à l'étendue dans les deux directions spatiales restantes (W, L) de sorte qu'essentiellement deux côtés plats essentiellement parallèles opposés l'un à l'autre et quatre côtés étroits reliant les deux côtés plats soient définis et dans laquelle les premier et deuxième conducteurs de courant (4, 6) dépassent parallèlement aux plans des deux côtés plats dans des directions opposées de deux côtés étroits opposés l'un à l'autre, de l'enveloppe (10), **caractérisée en ce que** l'étendue du premier et du deuxième conducteurs de courant (4, 6) le long des côtés étroits, desquels ils dépassent, est supérieure à la moitié de la longueur de ces côtés étroits et **en ce que** les deux conducteurs de courant (4, 6) se trouvent sur le côté extérieur inférieur de l'enveloppe (10) et sont en contact au travers de l'enveloppe (10) avec la partie active (8), dans laquelle un contact électrique est produit entre les conducteurs électriques (4, 6) et des languettes conductrices (12a, 12b, 14a 14b, 14c) de la partie active (8) par le biais de moyens de fixation (16a, 16b, 16c, 16d) et dans laquelle une plaque isolante interne traversante (22) est disposée entre la partie active (8) et l'enveloppe (10) dans la zone du moyen de fixation et dans laquelle les languettes conductrices (12a, 12b, 14a, 14b, 14c) se trouvent sur la plaque isolante interne (22) et des barres bus de courant (24a, 24b) se trouvent sur les languettes conductrices (12a, 12b, 14a, 14b, 14c) et dans laquelle entre l'enveloppe (10) et les conducteurs de courant (4, 6) est disposée respectivement une plaque isolante externe (20a, 20b) et dans laquelle les barres bus de courant (24a, 24b) sont reliées fixement aux conducteurs de courant (4, 6) par le biais de moyens de fixation (16a, 16b, 16c, 16d) au travers du film d'enveloppe (10).

2. Cellule de stockage d'énergie électrochimique (100, 200) selon la revendication 1, **caractérisée en ce que** l'étendue du premier et du deuxième conducteur de courant (4, 6) le long des côtés étroits desquels ils dépassent, est d'au moins deux tiers, de préférence, d'au moins trois tiers de la longueur de ces côtés étroits.

3. Cellule de stockage d'énergie électrochimique (100, 200) selon la revendication 1 ou 2, **caractérisée en ce qu'**au moins l'un des premier et deuxième conducteurs de courant (4, 6) est disposé de manière excentrée par rapport au côté étroit respectif.

4. Cellule de stockage d'énergie électrochimique (100, 200) selon la revendication 1 ou 2, **caractérisée en ce qu'**au moins l'un du premier et du deuxième conducteur (4, 6) est disposé au centre du côté étroit respectif.

5. Cellule de stockage d'énergie électrochimique (100, 200) selon la revendication 1 ou 4, **caractérisée en ce que** le premier et le deuxième conducteur de courant (4, 6) s'étendent essentiellement sur toute la longueur des côtés étroits desquels ils dépassent.

6. Cellule de stockage d'énergie électrochimique (100, 200) selon l'une des revendications précédentes, **caractérisée en ce que** l'enveloppe (10) est constituée d'un film de préférence stratifié qui enveloppe de façon étanche aux gaz et aux liquides le stratifié des électrodes et des couches de séparation, et en particulier **en ce que** l'enveloppe (10) est constituée d'une première couche isolante, d'une couche conductrice et d'une deuxième couche isolante, dans laquelle les couches isolantes sont constituées de préférence d'une matière plastique et la couche conductrice est constituée de préférence d'aluminium ou d'un alliage d'aluminium ou d'un autre métal ou d'un autre alliage métallique.

7. Cellule de stockage d'énergie électrochimique (100, 200) selon la revendication 6, **caractérisée en ce que** l'enveloppe (10) présente deux feuilles partielles qui sont soudées l'une à l'autre le long des côtés étroits.

8. Cellule de stockage d'énergie électrochimique (100, 200) selon l'une quelconque des revendications précédentes, **caractérisée en ce qu'**au moins l'un des conducteurs de courant (4, 6) présente dans la zone dépassant, au moins un alésage (30, 31) ou **en ce qu'**au moins l'un des conducteurs de courant (4, 6) dans la zone dépassant présente une multitude d'alésages (30, 31), dans laquelle de préférence au moins l'un des alésages (30, 31) présente un autre diamètre que celui des alésages (30, 31).

9. Cellule de stockage d'énergie électrochimique (100, 200) selon la revendication 8, **caractérisée en ce que** l'un des conducteurs de courant (4, 6) présente dans la zone dépassant au moins un alésage (30, 31) à un endroit dans le sens de la largeur sur laquelle l'autre conducteur de courant (4, 6) ne présente pas d'alésage (30, 31) dans la zone dépassant.

10. Cellule de stockage d'énergie électrochimique (100, 200) selon l'une quelconque des revendications précédentes, **caractérisée en ce qu'**il s'agit d'une cellule galvanique, en particulier, d'une cellule galvanique secondaire.

11. Cellule de stockage d'énergie électrochimique (100, 200) selon la revendication 10, **caractérisée en ce que** la partie active (8) présente une multiplicité d'électrodes de deux types, dans laquelle respectivement une électrode d'un premier type (36a, 36b, 36c) est séparée par une couche de séparation de l'électrode d'un autre type (44a, 44b), dans laquelle les électrodes du premier type (36a, 36b, 36c) et les électrodes du deuxième type (44a, 44b) sont reliées respectivement l'une à l'autre et avec l'un des conducteurs de courant (4, 6).

12. Cellule de stockage d'énergie électrochimique (100, 200) selon la revendication 11, **caractérisée en ce que** chaque électrode est un stratifié qui présente au moins deux couches d'un matériau chimiquement actif et au moins une couche d'un matériau électriquement conducteur et est imprégnée d'un matériau électrolytique, dans laquelle la couche ou les couches de matériau électriquement conducteur présentent une longueur supérieure à celle des couches du matériau chimiquement actif respectif et dépasse sur un côté du stratifié, dans laquelle le stratifié des électrodes est disposé et est de préférence stratifié avec des couches de séparation intermédiaires de telle sorte que les couches de matériau électriquement conducteur des électrodes d'un type dépassent sur un côté et sont reliées les unes aux autres à ce niveau, celles d'un côté sur lequel les couches de matériau électriquement conducteur des électrodes de l'autre type dépassent et sont reliées les unes aux autres étant superposées dans le sens longitudinal.

13. Cellule de stockage d'énergie électrochimique selon la revendication 12, **caractérisée en ce que** le matériau chimiquement actif présente au moins l'une des électrodes d'un composé au lithium.
